# EUROPEAN PATENT APPLICATION

(11) **EP 2 813 616 A1**
(43) Date of publication of application: **17.12.2014**
(21) Application number: 14171719.9
(22) Date of filing: 10.06.2014
(51) Int. Cl.: D06M 11/76, C08J 9/08, C09K 21/06, C09K 21/14, D06M 13/192, D06M 13/207, A62D 1/06

(54) **Flame retardant composition for textile**

(30) Priority: 10.06.2013 BE 201300403
(71) Applicant: EOC Belgium NV, 9700 Oudenaarde (BE)
(72) Inventor: Van Leuven, Ilse, 9230 Wetteren (BE); Duyvejonck, Wim, 8970 Waregem (BE)
(74) Representative: Brantsandpatents bvba

(57) **Abstract**

The present invention concerns flame retardant composition for coating a textile substrate based on an endothermic blowing agent which generates CO₂ and water when heated. The invention also concerns a textile product with flame retardant properties comprising a textile substrate treated with flame retardant composition. Furthermore, the invention provides a method for producing the composition and for the treatment of a textile substrate with the composition. Finally, the invention provides in some uses of the composition.

## Description

### TECHNICAL FIELD

The invention relates to the field of flame-retardants, in particular to a flame-retardant composition for textile.

### STATE OF THE ART

Textile is an essential part of everyday life. Textile can be found, for example, in curtains, cloths, furniture and car upholstery, toys, packaging materials and many more applications. Consequently, flammability of textile is of great importance.

The flammability of fabrics is determined by the nature of the fibers which make up the product. For example, some synthetic fibers such as melamine, polyaramids, acrylic and glass are inherently flame retardant, while others such as cotton, polyester and linen can easily ignite. For these, the degree of flammability depends on the type of fiber and its characteristics. For example, a textile made from a fiber mixture usually burns faster and at higher temperatures compared to each fiber type in itself. Fabric flammability is also dependent on the thickness of the fabric and/or density.

Several approaches have been suggested for retarding the flammability of flammable fabrics.

A first approach comprises fiber copolymerization and/or addition: different fiber monomers are mixed and copolymerized, thereby improving the characteristics of a fiber by the improved characteristics of another fiber.

But this technique is limited because of the number of fibers present and their properties, and not custom-made to each substrate or requirements. In addition, fiber types and copolymerizations of fibers are not necessarily compatible, which further limits the applicability of this technique. An additional disadvantage of this approach are the high costs of the fire-resistant fibers.

Another approach concerns the insertion of flame retardant agents in or on the fabric via one of three methods:
(a) chemical post-treatment, the fabric is treated with a flame retardant agent after it was manufactured, either by coating of the fabric, or by the insertion of the flame retardant agent in the fabric during the final dyeing process. The flame retardant agent may be applied on the back of the fabric, a so-called back-coating, or to the front, so-called front-coating, depending on the specific fabric application. For example, for curtains, upholstery, clothing and bedding, where the aesthetic appearance of the front side of the fabric is important, a back-coating is preferred.
(b) Fibre-matrix additive, the so-called compounding: the flame retardant agent is coupled to the fiber in the melt-spinning process. This method has many disadvantages: (i) degradation of the flame retardant agent due to the high temperature extrusion, (ii) reaction of the flame-retardant agent with the extruded fiber and subsequent modification of the fiber properties, such as fiber dyeability, fiber processability or other physical properties of the fiber, and (iii) reaction of the flame-retardant agent with different polymer additives such as coloring agents and catalysts,
(c) Application of flame-retardant additives to a fabric surface, either directly, or by means of finishing products (resins) which chemically or physically bind the flame retardant to the fabric. Disadvantages of this method are: (i) finishing products can generally be applied to cotton fibers, but they usually cannot be applied to synthetic fibers because of the absence of functional groups with which they can react in this application, (ii) some finishing products use toxic substances such as formaldehyde resins which can release formaldehyde, and (iii) in some finishing products ammonia is used as a hardener.

The selection of the appropriate flame retardant agents and the appropriate method for the application on fabric largely depends on the specific textile substrate which needs to be protected. For example, the protection of a garment or the protection of an electrical device will inherently impose different requirements and restrictions to the flame retardant agent.

For use in textile, a flame retardant agent preferably possesses the following properties: (a) compatible with the fabric, (b) non-harmful to the aesthetic and textural properties of the fabric, (c) resistant to extensive washing and cleaning, (d) ecologically and physiologically safe, (e) low emission of toxic gases, (f) cheap. These properties can be summarized under the name of sustainability.

Extremely important is that the flame retardant agent can withstand the required fire tests.

Currently, there are four important families of fire retardant chemicals:
- Inorganic fire retardants, such as metal hydroxides, with the examples of aluminum hydroxide and magnesium hydroxide; and antimony and boron compounds, ammonium polyphosphate;
- Halogenated flame retardants, in the first place on the basis of bromine and chlorine;
- Nitrogen-based organic flame retardants; and
- Phosphorus-based organic compounds, organophosphorus compounds, especially phosphate esters.

Bromine-containing compounds have already been known as flame retardants for a long time. However, the use of aromatic bromine compounds as flame retardants for textile has major disadvantages, including the requirement for a high bromine content, high dry add-on and/or binder need, and the need for the addition of compounds which enhance the flame retardancy.

It is extremely undesirable to apply large amounts of fire-retardant formulation to textile as large amounts of additives applied to the dry fabric lead to a reduction of material properties and increase the production costs.

In addition, the application of the above-mentioned flame retardants on fabric can lead to rubbing stripes on dark fabrics, excessive dripping during the combustion of thermoplastic fibers, a relatively high level of smoldering fibers and a general instability of the flame retardant dispersion which may prevent a uniform application on the fabric.

Application of flame retardant products to a fabric may lead to changes of the fabric in relation to the aesthetic aspect. This is an inherent consequence of the flame-retardant finishing. The aim is to minimize these aesthetic changes and to adjust them in such a way that these are brought to a level acceptable for the market.

The aesthetic aspect in the broad sense: both in terms of feel, view, and weight.

In recent years, there has been a considerable effort to develop phosphorus-based flame retardant agents and textile coating formulations. In this way, there is some use of ammonium polyphosphate or melamine polyphosphate in textile coating formulations.

However, both ammonium polyphosphate and melamine polyphosphate are hard to grind to an average particle size of less than 50 microns, and even more difficult to grind to an average particle size of less than 20 microns. Therefore, a coating suspension of ammonium polyphosphate or melamine polyphosphate is only stable for a short time and the surface of the coating is rough. In addition, both ammonium polyphosphate and melamine polyphosphate are susceptible to hydrolysis. Therefore, coated embodiments are preferred for textile applications.

Thus, there is a generally recognized need for flame retardant formulations without the above-mentioned restrictions. There is need for flame retardant agents with improved performance, which are less harmful to textile properties. There is also a need for an efficient flame-retardant agent which requires a relatively low binder content and is characterized by good dispersion properties.

The present invention aims to find a solution for at least some of the above-mentioned problems.

The invention aims to find a solution for this by providing an improved flame-retardant composition, suitable for application to textile. The invention also aims to provide a method to produce the flame retardant composition and to apply it on textile. In addition, the invention provides some uses for the flame-retardant composition.

### SUMMARY

Surprisingly, it has been found that a textile can be made flame retardant with a CO₂-generating blowing agent.

The term "fiber" as used hereafter refers to a natural or synthetic filament which is suitable to be spun into a yarn, or which can be made into a fabric.

The terms "fabric", "textile" and "textile substrate" are herein used interchangeably to describe a sheet structure made from fibers.

The term "flame-retardant composition" as used herein describes a composition or a formulation which can reduce or eliminate the tendency of a fabric to support the combustion when exposed to a small flame.

The invention relates in a first aspect to a flame-retardant composition for coating a textile substrate, comprising: 1-80% by weight of endothermic blowing agent comprising, in combination, an organic acid and an inorganic carbonate base suitable for forming water and CO₂ when heated, 1-20% by weight of surfactant, optionally a binder and/or an excipient, remaining water, expressed with respect to the total weight of the composition.

This composition has the advantage that no brominated or antimony-containing compounds have to be used. The presence of sufficient surfactant prevents the formulation from gelling. The surfactant ensures that an aqueous dispersion of the blowing agent can be created which can easily be applied to a textile material. The blowing agent is environmentally friendly.

In a preferred embodiment of the composition, the blowing agent has a decomposition temperature of at least 140 °C.

The term "decomposition temperature" in the present invention means the temperature at which the acid and the base react and decompose into water and CO₂.

In a preferred form, the acid is selected from the group of malonic acid, citric acid and citric acid derivatives such as esters; and the base is bicarbonate.

Said acids occur in solid form which is an advantage for the formulation thereof. Preferably, the blowing agent is in powder form, more preferably as free flowing powder. By free flowing powder it is meant that the powder particles do not stick together. Preferably, a combination of sodium bicarbonate or sodium hydrogen carbonate and citric acid derivatives is used, preferably an acid/carbonate combination is comprised in polymeric carrier granules; most preferably, a combination of sodium bicarbonate or sodium hydrogen carbonate and citric acid derivatives in polymeric carrier granules is used.

In a preferred embodiment of the composition, the excipient is selected from the list of a binder, a dispersing agent, a plasticizer, a textile softener, a thickener, a biocide, an anti-foaming agent, a filler, or combinations thereof.

In a preferred embodiment of the composition, the excipient is a plasticizer and/or a textile softener.

In a preferred embodiment, the composition comprises a plasticizer on the basis of silicone. This allows for an increased flexibility of a coating of the fire-resistant product applied to a textile substrate.

In a preferred embodiment of the composition, the dry matter content is 40%-70%, preferably 40%-60%, more preferably 45%-55%, even more preferably 49%-51%. This offers the advantage that transport costs can be reduced by transporting as little water as possible. It also has the advantage that after application of the formulation, less water has to be removed.

In a second aspect, the invention relates to a textile product with flame retardant properties comprising a textile substrate, wherein the fabric substrate comprises:
- a composition of yarns, fibers and/or straps, natural and/or synthetic, processed into a whole,
- a binder to keep the composition together or to hold it to a carrier material, wherein the binder is provided with a fire-retardant composition according to an embodiment of the invention.

In a third aspect, the invention provides a method for producing a flame-retardant composition for coating a textile substrate comprising the steps of: adding to water 1-80 % by weight of endothermic blowing agent comprising, in combination, an organic acid and an inorganic carbonate base suitable for forming water and CO₂ when heated, and 1-20 % by weight of surfactant, optionally adding to the thus obtained dispersion a binder, optionally adding one or more excipients.

In a fourth aspect, the invention provides a method for making a textile substrate flame-retardant, comprising the steps of:
- providing a textile substrate,
- applying a composition according to an embodiment of the invention on one or more surfaces of the textile substrate; preferably on the back of the textile substrate, and
- drying of the textile substrate provided with flame-retardant composition at a temperature lower than the decomposition temperature of the blowing agent.

Application of the fire-resistant composition on the back has the advantage that the aesthetic properties of the front, for example, printing, may be maintained.

In a preferred embodiment of a method according to the invention, the flame-retardant composition is applied to the fabric via foam application to a foam liter weight of 200 to 400 g/l. Preferably, between 20 and 40% wof (weight of fabric) is applied.

In a preferred embodiment of a method according to the invention, the composition is applied to the back via coating, preferably by means of a paste coating or foam coating.

In a further aspect, the invention provides a method for making textile flame retardant.

Originally, "textile" is everything which is woven. Currently, textile is used much broader. Textile is a material which consists of filaments, fibers, straps, or other. Textile is practically always deformable (flexible) and can be two-or three-dimensional.

The consistency of this material is given by the process itself such as, among others, weaving, knitting, tufting or filming.

Making textile flame-retardant comprises the following steps:
- The application of a composition according to the embodiment of the invention on one or all sides.
- The application of the composition can be done in various ways, such as, inter alia, via a coating process (single-sided), a foulard process, or other.
- The drying of the textile provided with flame retardant composition at a temperature lower than the decomposition temperature of the blowing agent.

In a final aspect, the invention provides a use of a composition according to an embodiment of the invention for making a textile substrate flame retardant, preferably complying with BS 5852.

In a preferred embodiment of a use according to the invention, the textile substrate is a floor covering, a carpet, a mat, a curtain fabric, an upholstery fabric, a mattress, a mattress ticking, a toy, a wallpaper fabric, a technical textile, or combinations thereof.

### DETAILED DESCRIPTION OF THE INVENTION

Unless otherwise defined, all terms used in the description of the invention, including technical and scientific terms, have the meaning as they are commonly understood by those skilled in the art in the technical field of the invention. For a better assessment of the description of the invention, the following terms are explicitly explained.

"A", "an" and "the" in this document refer to both the singular and the plural, unless the context clearly implies otherwise. For example, "a segment" means one or more than one segment.

When "about" or "around" are used in this document with a measurable quantity, a parameter, a temporal duration or time, and the like, variations are meant of +/-20% or less, preferably +/-10% or less, more preferably +/-5% or less, still more preferably +/-1% or less, and even more preferably +/-0.1% or less than and of the cited value, insofar that such variations apply in the described invention. It should, however, be understood that the value of the quantity wherein the term "about" or "around" is used, is specifically disclosed itself.

The terms "comprise", "comprising", "consist of", "consisting of", "provided with", "include", "including", "contain", "containing" are synonyms and are inclusive or open terms which indicate the presence of what follows, and which do not preclude of exclude the presence of other components, features, elements, members, steps, known from or described in the prior art.

The quoting of numerical intervals by endpoints comprises all integers, fractions, and/or real numbers between the endpoints, these endpoints included.

The present invention relates to the application of an endothermic blowing agent as flame retardant in textile back-coating.

By the term "blowing agent", as used in the present invention, is meant a chemical blowing agent for thermoplastic plastics such as polyethylene and polypropylene. In combination with a gas such as nitrogen or air, blowing agents are used as "nucleating means " to obtain a cellular structure as fine as possible in plastics.

Blowing agents have the advantage that they contain carbonates and citric acid-like compounds in combination, i.e. in the same agent. Their addition to water does not give rise to premature CO₂ release.

The endothermic blowing agent is preferably used in the form of granules, such as, for example, described in WO 02/07949, wherein the CO₂-generating blowing agent comprises at least the components sodium hydrogen carbonate, monosodium citrate and solid substances as a nucleating means, wherein the particle size of the individual components is than or equal to 40 microns. The particle size of the individual components is preferably equal to or less than 40 µm, preferably equal to or less than 30 µm, more preferably about 25 µm. As nucleating agent, all solid substances qualify which fulfill the property of being used as nucleating agent. Preferably, the nucleating agent is selected from the list of talc, chalk, metal oxide, silicon dioxide, color pigments, and/or a combination thereof. Preferably, talc is used with a desired particle size. In the context of the invention, in the blowing agent, the weight ratios of sodium hydrogen carbonate with respect to monosodium citric acid with respect to nucleating agent are as follows: 1 to 0.5 - 5 to 3 - 13.5 weight percent, preferably 1 to 0.5 - 2.5 to 3 - 6.0 weight percent, most preferably 1 to 0.5 - 2.0 to 3 - 4.0 weight percent.

The endothermic blowing agent is preferably used in the form of a polymeric concentrate, such as, for example, described in US 5009809. In general, a method for producing a blowing agent in the form of a polymeric concentrate comprises the following steps: heating a dry powder of a polycarboxylic acid between 68 °C and 80 °C, adding hereto a surfactant to obtain a poly-carboxylic acid which is surface treated; heating a dry powder of an inorganic carbonate to a temperature of 68 to 80 °C and adding hereto a surfactant to form an inorganic carbonate which is surface treated, and mixing the treated poly-carboxylic acid and inorganic carbonate to form an endothermic blowing agent. In an embodiment, the concentrate can be prepared with a loading level of 5-50% in a single or twin-screw extruder, using techniques known to those skilled in the field of plastic compounding.

A blowing agent according to an embodiment of the invention is more preferably in the form of carrier granules, most preferably in the form of polymeric carrier granules, such as, , for example, described in EP 0650505. A process to obtain endothermic blowing agents in polymeric carrier granules form comprises the compounding or mixing of a resin carrier with the endothermic blowing agent under the processing or mixing zones with higher working pressures, as a result of which the mixture of blowing agent and resin carrier is pressed through a matrix and forms strands, followed by pelletizing under water. By using the strands under pressure and to quickly cool them off with cooled water, the outer surface of the resin carrier solidifies and the blowing agent is encapsulated in the carrier, the encapsulation occurs under water at a water pressure between 10 and 200 pounds per square inch gage (psig) and water temperatures of between 40 ° and 180 °F. It was found that, when the carrier and the blowing agent are quickly cooled off and a positive pressure is maintained in the water, during cutting or pelletizing, the blowing agent was encapsulated, without substantial reaction in the resin carrier and a pelletized concentrate is formed. In this way, concentrates can be formed with 5 to 70% by weight of active substance.

Suitable endothermic blowing agents in the form of granules for use in the present invention are commercially available, for example, Luvobatch powders available at the firm Lehmann&Voss&Co, Germany, Palmarole products available at the firm Adeka Palmarole, France, Genitron products from the firm Lanxcess, Germany, Plastron foam products from the firm Plastron, France, Foamazol products of the firm Bergen International, USA, Celborn SC products from the firm Eiwa Chemical Ind. Co., Ltd., Japan. Plastron foam, free flowing powders, are preferred.

The textile may be selected from the non-limiting group of synthetic textile, natural fabrics and mixtures thereof.

Non-limiting examples of textile substrates which can be used advantageously in the context of the present invention comprise wool, silk, cotton, linen, hemp, jute, acetate fabric, acrylic fabric, latex, nylon, polyester, viscose, spandex, and combinations thereof.

In a preferred embodiment, the textile substrate concerns cotton, polyester, and combinations thereof.

The textile substrate which is used in the present invention can be composed of one or several layers. The textile substrate may be part of an object, wherein it is desired to reduce the flammability of the textile in the object. Objects comprising textile substrate can be: car seats, furniture, wall coverings, blinding systems, toys, electrical appliances, a curtain, a mattress, a mattress ticking, a carpet, a tent, a decorative fabric, a covering, a ceiling tile, a wall fabric, a curtain and other technical textile.

Technical textile is textile used in industrial, automotive, construction, aerospace, sanitation and similar applications.

More specifically, the invention concerns in a first aspect a flame-retardant composition for coating a textile substrate. The composition comprises 1-80% by weight of endothermic blowing agent and 1-20% by weight of surfactant.

By the term "endothermic blowing agent" in the present invention is meant an agent which releases CO₂ when heated and thereby extracts heat from its surroundings. The endothermic blowing agents used in the invention comprise an organic acid and an inorganic carbonate base. Preferably, for the inorganic carbonate base, sodium bicarbonate is used.

Combination with an organic acid provides buffering and influencing of the temperature for gas release. Preferably, malonic acid, citric acid or a citric acid derivative, such as a citric acid ester, are used. Citric acid esters are, for example, the reaction products of citric acid with an alcohol ROH with an alkyl group size of up to eight carbon atoms. Said acids appear in solid form which is an advantage for the formulation thereof.

Preferably, a combination is used of sodium bicarbonate and citric acid derivatives in polymeric carrier granules.

By the term "decomposition temperature" is meant in the present invention, the temperature at which the acid and the base react and decompose into water and CO₂. In a preferred embodiment of the composition, the endothermic blowing agent has a decomposition temperature of at least 140 °C, preferably 160 °C, more preferably 180 °C, most preferably 190 °C. Preferably, the decomposition temperature is not higher than 250 °C, preferably 240 °C, more preferably 230 °C, most preferably 220 °C. In a preferred embodiment, the decomposition temperature is at 190 °C and the CO₂ formation reaches a maximum at 200 °C.

In a preferred embodiment, the endothermic blowing agent has a gas yield lying between 100 and 150 ml gas/g of blowing agent, preferably about 135 ml/g. The volume of gas generated by a blowing agent can be determined by means of ASTM D 1715-60T. This gas yield of the blowing agent is advantageous in order to provide a fire-resistant effect

In a preferred embodiment, the flame-retardant composition comprises 1-80% by weight of endothermic blowing agent, preferably 10-70% by weight, more preferably 20-60% by weight, most preferably 30-50% by weight, even most preferably 35-45% by weight, expressed with respect to the quantity by weight of wet formulation.

A flame retardant composition according to an embodiment of the invention further comprises a surfactant. The presence of sufficient surfactant prevents the formulation from gelating. The surfactant ensures that an aqueous dispersion of the blowing agent can be created which can easily be applied to a textile material. The blowing agent is environmentally friendly.

As surfactants for use in a composition according to the invention, inter alia, the following can be taken into consideration: anionic surfactants, non-ionic surfactants and amphoteric surfactants. Suitable anionic surfactants are, for example, sulfosuccinates, sodium olefin sufonates (C14-C16), fatty alcohol polyglycol ether sulfate sodium salt, phosphate esters. Suitable non-ionic surfactants are, for example, alkyl polyglucosides (C8-C14), fatty alcohol ethoxylates. Amphoteric surfactants which may be used are betaines.

In a preferred embodiment, the flame-retardant composition comprises 1-20% surfactants, preferably 1.5-15%, more preferably 2.0-10%, most preferably 2.0-5.0%, expressed as percentages by weight with respect to the wet formulation.

In a preferred embodiment, the flame-retardant composition further comprises a binder. Presence of a binder is advantageous for the adhesion of the formulation onto the textile substrate.

As binders for use in a flame-retardant composition according to an embodiment of the invention, the following can be taken into consideration: acrylates, styrene-acrylates, polyvinyl acetates, styrene-butadiene latex, ethylene-vinyl acetates, and the like.

In a preferred embodiment, the flame-retardant composition comprises 0-50% of binders, preferably 1-40%, preferably 5-30%, more preferably 10-25%, most preferably 10-15%, expressed as percentages by weight with respect to the wet formulation.

Furthermore, excipients may be used in the composition, such as dispersing agents, plasticizers, textile softeners, thickeners, biocides, anti-foaming or defoaming agents, fillers and the like.

Dispersing agents for use in a flame-retardant composition according to an embodiment of the invention are: sodium polyacrylates, sodium dinaphtalene sulfonate, phosphonate salt solutions, copolymer with pigment affinity groups, multi-functional polymers, and the like.

In a preferred embodiment, the flame-retardant composition comprises 1-20% of dispersing agents, preferably 1.5-10%, more preferably 2-5%, expressed as percentages by weight with respect to the wet formulation.

Plasticizers for use in a flame-retardant composition according to an embodiment of the invention are: benzoate esters, phosphate esters such as tricresyl phosphate, butylated triphenyl phosphate ester or tributoxy ethyl phosphate; acetylated monoglycerides; glycerol triacetate; carboxylates such as 1,2-cyclohexane dicarboxylic acid di-isononyl ester; citrates such as tributyl citrate, tributyl 2-acetyl citrate; alkyl sulfonic acid ester with phenol; silicone softeners; fatty acid condensate-, polyethylene derivatives, waxes, and the like.

In a preferred embodiment, the flame-retardant composition comprises 0-20% of plasticizers, preferably 1-10%, preferably 2-5%, more preferably 3-4%, expressed as percentages by weight with respect to the wet formulation.

Textile softeners for use in a flame-retardant composition according to an embodiment of the invention are: silicone amino fluid emulsions, both hydrophobic macro-emulsions, hydrophobic micro-emulsions, hydrophilic softeners, and the like. In a preferred embodiment, the flame-retardant composition comprises 0-20% textile softeners, preferably 1-10%, preferably 1.0-1.5%, expressed as percentages by weight with respect to the wet formulation.

Thickeners for use in a flame-retardant composition according to an embodiment of the invention are: xanthan gum, polyurethane thickeners, polyacrylate thickeners, and the like.

In a preferred embodiment, the flame-retardant composition comprises 0-10% of thickeners, preferably 1-5%, more preferably 1.5-2.0%, expressed as percentages by weight with respect to the wet formulation.

Biocides for use in a flame-retardant composition according to an embodiment of the invention are: biocides on the basis of 1,2-benzisothiazolin-3-one (BIT) and 2-methyl-4-isothiazolin-3-one (MIT), and the like.

In a preferred embodiment, the flame-retardant composition comprises 0-5% of biocides, preferably 0.01-1%, preferably 0.02-0.05%, expressed as percentages by weight with respect to the wet formulation.

Anti-foaming or defoaming agents for use in a flame-retardant composition according to an embodiment of the invention are: silicone-based anti-foaming agents, mineral oil-based anti-foaming agents, polymeric anti-foaming agents, and the like.

In a preferred embodiment, the flame-retardant composition comprises 0-5% anti-foaming or defoaming agents, preferably 1-3%, expressed as percentages by weight with respect to the wet formulation.

Fillers for use in a flame-retardant composition according to an embodiment of the invention are, among others: aluminum trihydroxide (ATH).

In a preferred embodiment, the flame-retardant composition comprises 0%-50% of fillers, preferably 1%-25%, expressed as percentages by weight with respect to the wet formulation.

The amount of the various additives which needs to be added depends on the amount of blowing agent which is added to the formulation.

For the remaining part, the formulation contains water.

In a preferred embodiment of the composition, the dry matter content is 40%-70%, preferably 40%-60%, more preferably 45%-55%, more preferably 49%-51%; most preferably around 50%. This offers the advantage that transport costs can be reduced by transporting as little water as possible. It also has the advantage that after application of the formulation, less water needs to be removed.

In a preferred embodiment, the fire-resistant composition has a pH of 3-5, preferably around 3.5.

In a preferred embodiment, the fire-resistant composition has a viscosity of 1000-5000 mPa.s measured with a Brookfield viscometer with spindle 3 at speed 20.

In another preferred embodiment, the fire-resistant composition has a viscosity of 50 mPa.s to 25000 mPa.s, measured with a Brookfield viscometer with spindle 3 at speed 20. This viscosity is suitable for paste coating.

In a second aspect, the invention concerns a textile product with flame retardant properties comprising a textile substrate coated with a composition according to a preferred embodiment of the invention.

In a preferred embodiment of a textile product according to the invention, the textile substrate comprises:
- A composition of yarns, fibers and/or straps, natural and/or synthetic, which are processed into a whole. The processing can be done via weaving, knitting, tufting or other processes of combining of these yarns, fibers and/or straps.
- A binder which has the property to keep the different yarns, fibers and/or straps together or hold them to a carrier material.
- The binder is provided with fire-retardant chemicals and subsequently applied to the fabric.

A fire-resistant composition according to an embodiment of the invention has the advantage that it is compatible with a latex back which can be found on textile substrates, such as carpet tiles, mats. The composition can be applied to the latex or can be mixed with the latex composition to obtain a latex-based back. The gas generated by the blowing agent is diffusible through the latex layer in the direction of the carrier fabric and in this way, in the direction of the heat source. The diffusibility is further enhanced by the presence of fillers in the latex composition and/or fire-resistant composition. The fillers generally provide a coarse stacking of particles with many pores.

In a third aspect, the invention provides a method for producing a flame-retardant composition for coating a textile substrate comprising the steps of: adding to water 1-80 weight% of endothermic blowing agent comprising an organic acid and an inorganic carbonate base suitable for forming water and CO₂ when heated, and 1-20 weight% of surfactant, optionally adding to the thus obtained dispersion a binder, optionally adding one or more excipients. Preferably, the blowing agent is based on a combination of bicarbonate, such as sodium bicarbonate, and citric acid or citric acid esters.

The blowing agent is available in powder form. This has the advantage that there is less risk of product loss. It can easily be dosed.

In a fourth aspect, the invention provides a method of making a textile substrate flame-retardant, comprising the steps of:
- providing a textile substrate,
- applying a composition according to an embodiment of the invention on one or more surfaces of the textile substrate; preferably on the back-side of the textile substrate, and
- drying of the textile substrate provided with flame-retardant composition at a temperature lower than the decomposition temperature of the blowing agent.

The drying temperature should be lower than the decomposition temperature of the flame retardant. Preferably, the difference between the drying temperature and the decomposition temperature of the blowing agent is at least 10 °C, preferably at least 15 °C, more preferably at least 20 °C.

Various techniques are known to a person skilled in the art for the finishing of a textile substrate. The finishing of a textile substrate generally comprises the application of a composition with a suitable applicator, removal of water (drying) and heating the textile substrate to a temperature wherein it is fixed (curing). The process can be referred to as pad-dry-cure or coat-dry-cure.

Applicators which, among others, may be used for applying a finish to a textile substrate are padders, lick-roll applicator, a reverse roll coater, an engraved roller applicator, foam or paste applicators, a blade coater.

For use in the present invention, preference is given to foam and-paste applicators.

In a preferred embodiment of a method according to the invention, the flame-retardant composition is applied as a foam coating. This offers the advantage of ensuring a better distribution of the flame-resistant compound. Another advantage is a better penetration of the compound in the treated fabric. A paste coating is more situated at the surface.

In a preferred embodiment of a method according to the invention, the flame-retardant composition is applied to the fabric via the application of foam at a foam liter weight of 200 to 400 g/l. Preferably, between 20 and 40% wof (weight of fabric) is applied.

In a preferred embodiment of a method according to the invention, the composition is applied to the back via coating, preferably by means of a paste coating or foam coating. In a preferred embodiment, the flame-retardant composition is applied by means of a foam coating.

The amount of blowing agent (dry) applied to the fabric is strongly dependent on the type of fabric and is preferably between 10% and 50%, more preferably between 12% and 25% by weight dry.

In a preferred embodiment of the invention, the flame-retardant textile product is produced by firstly producing a dispersion. To this end, a suitable amount of CO₂ generating blowing agent with a decomposition temperature of between 140 °C and 200 °C is mixed with water. Optionally, additives are added. The aqueous dispersion is brought to a solids content of 40%-70%, preferably 50%-60%, and a pH of 3.0-5.0. A suitable amount of binder is added to the dispersion; as well as at least an excipient selected from the group of surfactants, plasticizers, biocides, in order to obtain a compound with 35-45% of CO₂ generating blowing agent. The compound is applied to a textile substrate as a foam coating, preferably on the back-side. The still wet, coated textile substrate is dried at a drying temperature which is typically at least 20 °C lower than the decomposition temperature of the blowing agent. This results in an eco-friendly textile substrate with improved flame-resistant properties.

A number of examples for various applications are summarized in Tables 1-4. Unless stated otherwise, the viscosity is measured using a Brookfield viscosity meter at speed 20 with spindle 3. The drying temperature was 125 °C. The decomposition temperature is higher than 190 °C.

**Table 1: for upholstery**

| Composition textile substrate | 100% synthetic to a mixture with natural fibers in all ratios |
|---|---|
| Substrate construction | Fabric, knitted fabric, non-woven |
| Substrate weight | 50 - 600 g/m² |
| Application method | Back coating by means of foam coating or paste coating; lick-roll |
| Application rate flame-retardant composition | 10 - 40 % fabric weight (wof) |
| Specification of the flame-retardant composition | solids content: 40-65% |
| | viscosity: 50 - 25000 mPa.s |
| | pH: 3-5 |
| Most used fire test | BS 5852 part 1 and 2 |

**Table 2: for vertical blinds - sun screens**

| Composition textile substrate | 100% synthetic to a mixture with natural fibers in all proportion/ratios |
|---|---|
| Substrate construction | woven, non-woven |
| Substrate weight | 50 - 350 g/m² |
| Application method | Back coating by means of paste; lick-roll; padding |
| Application rate flame-retardant composition | 10 - 30 % fabric weight (wof) |
| Specification of the flame-retardant composition | solids content: 40-50% |
| | viscosity: 50 - 25000 mPa.s |
| | pH: 3-5 |
| Most used fire test | BS 5867 - NFPA 701 - NF P 92 503 (M-classification) |

**Table 3: for blackout curtains and roll-up curtains**

| Composition textile substrate | 100% synthetic to a mixture with natural fibers in all proportion/ratios |
|---|---|
| Substrate construction | woven, non-woven |
| Substrate weight | 50 - 300 g/m² |
| Application method | Back coating by foam coating or paste coating |
| Application rate flame-retardant composition | 80 - 250 g/m² |
| Specification of the flame-retardant composition | solids content: 40-65% |
| | viscosity: 50 - 25000 mPa.s |
| | pH: 3-5 |
| Most used fire test | BS 5867 - NFPA 701 - NF P 92 503 (M-classification) |

**Table 4: for wallpaper fabric**

| Composition textile substrate | 100% synthetic to a mixture with natural fibers in all proportion/ratios |
|---|---|
| Substrate construction | fabric, knit, non-woven |
| Substrate weight | 50 - 300 g/m² |
| Application method | Back coating by foam coating or paste coating; lick-roll |
| Application rate flame-retardant composition | 10 - 40 % fabric weight (wof) |
| Specification of the flame-retardant composition | solids content: 40-65% |
| | viscosity: 50 - 25000 mPa.s |
| | pH: 3-5 |
| Most used fire test | EN 13501-2 - EN 11925 |

The flammability of different textile substrates or of items with these textile substrates is usually tested and determined according to flammability test methods.

Representative examples are, inter alia, the British Standard BS 5852 part 1, a standard test method for the flammability of upholstered furniture.

In a final aspect, the invention provides a use of a composition according to an embodiment of the invention for making a textile substrate flame-retardant, preferably in accordance with BS 5852.

In a preferred embodiment of a use according to the invention, the textile substrate is a floor covering, a carpet, a mat, a curtain fabric, an upholstery fabric, a mattress, a toy, a wallpaper fabric, a technical textile, or combinations thereof.

In what follows, the invention is described with reference to non-limiting examples which illustrate the invention, and which are not intended or should be interpreted to limit the scope of the invention.

### EXAMPLES

Unless otherwise stated, the indicated amounts of percentages by weight are on the wet formulation.

The drying temperature was 125 °C. The decomposition temperature is higher than 190 °C.

### Example 1

A first flame retardant compound was formulated by adding to water a surfactant and an endothermic blowing agent based on bicarbonate and citric acid (Plastronfoam, decomposition temperature > 190 °C, 90% content of active substance). Furthermore, a binder and excipients were used. Details of the composition are shown in Table 5.

**Table 5: flame-retardant composition**

| Composition | Weight (g) |
|---|---|
| water | 40 |
| surfactant | 6 |
| endothermic blowing agent | 37 |
| binder | 10 |
| excipients | 7 |
| | 100 |

### Example 2

For the formulation of a second flame retardant compound, use was made of a sodium di-naphthalene methane sulphonate dispersing agent, an endothermic blowing agent (Plastronfoam, decomposition temperature> 190 °C, 90% of active substance), a styrene-acrylate binder, a benzoate ester plasticizer, a C14-C16 sodium olefin sulfonate surfactant, a biocide blend of 1,2-benzisothiazolin-3-one (BIT) and 2-methyl-4-isothiazolin-3-one (MIT) and a polyurethane thickener. Details of the composition are shown in Table 6. This compound had a dry matter content of 49%-51%, a pH of 3.5-4.5, a density of 1.1-1.5 and a viscosity of 1000-2000 mPa.s (spindle 3, speed 20).

**Table 6: flame-retardant composition**

| Composition | Weight (g) |
|---|---|
| water | 39 |
| dispersing agent | 4,1 |
| endothermic blowing agent | 38,5 |
| binder | 15 |
| plasticizer | 1 |
| surfactant | 1 |
| biocide | 0,1 |
| thickener | 1,3 |
| | 100 |

### Example 3

For the formulation of a third flame-retardant compound, use was made of a sodium di-naphtalene methane sulfonate dispersing agent, an endothermic CO₂ generating blowing agent (Plastronfoam, decomposition temperature > 190 °C, 90% of active ingredient content), a styrene-acrylate binder, an alkyl polyglucoside based on a C8-C10 fatty acid alcohol surfactant, a sodium olefin C14-C16 sulfonate surfactant, a biocide blend of 1,2-benzisothiazolin-3-one (BIT) and 2-methyl-4-isothiazolin-3-one (MIT) and a polyurethane thickener. Details of the composition are shown in Table 7. This compound had a dry matter content of 49%-51%, a pH of 3.5-4.5, a density of 1.1 to 1.5 and a viscosity of 1000-2000 mPa.s (spindle 3, speed 20).

**Table 7: flame-retardant composition**

| Composition | Weight(g) |
|---|---|
| water | 39 |
| dispersing agent | 4,1 |
| endothermic blowing agent | 38,5 |
| binder | 15 |
| surfactant 1 | 1 |
| surfactant 2 | 1 |
| biocide | 0,1 |
| thickener | 1,3 |
| | 100 |

### Example 4

A fourth example of a flame retardant compound is shown in Table 8. For the formulation of this composition a phosphonate salt dispersing agent was used, a blowing agent sodium bicarbonate/citric acid (Plastronfoam, decomposition temperature > 190 °C, 90% of active substance), a styrene-acrylate binder, tricresyl phosphate and butylated triphenyl phosphate ester plasticizers, a non-ionic micro-emulsion of a reactive amino-functional silicone textile softener, a sodium olefin (C14-C16)sulfonate, a biocide blend of 1,2-benzisothiazolin-3-one (BIT) and 2-methyl-4-isothiazolin-3-one (MIT), and a polyurethane thickener. The remaining part of the composition is water. This compound had a dry matter content of 49%-51%, a pH of 3.5-4.5, a density of 1.1 to 1.5 and a viscosity of 1000-2000 mPa.s (spindle 3, speed 20).

**Table 8: flame-retardant composition**

| Composition | Weight(g) |
|---|---|
| water | 41,5 |
| dispersing agent | 2,5 |
| endothermic blowing agent | 36,5 |
| binder | 10,5 |
| plasticizer 1 | 2,5 |
| plasticizer 2 | 2 |
| textile softener | 1,2 |
| surfactant | 2 |
| biocide | 0,1 |
| thickener | 1,2 |
| | 100 |

### Example 5

The compound of example 2 was coated on a fabric consisting of 72% of polyester and 28% of viscose (fabric 1), substrate weight 370 g /m². The coating was applied via foam application at a foam liter weight of 200-400 g/l.

On the coated fabric, the BS 5852 fire test was conducted: flame 3cm - 20" vertically on mousse.

From the results of the fire test shown in Table 9, it follows that when 93 g/m² of dry product, this is 25% wof, of the compound of example 2 is applied to the fabric 1, the coated fabric passes the BS5852 test. The after-flaming time at a flaming time of 20s is less than 120s.

**Table 9: burn test**

| | coating weight | Flaming time | 20s |
|---|---|---|---|
| compound example 2 | 93 g/m² | after-flaming time | 0s/0s/0s |
| fabric 1 | 25% wof | conclusion | OK |

| | | | |
|---|---|---|---|
| Wof=weight of fabric | | | |

### Example 6

The compound of example 3 was coated on a polyester/cotton fabric (fabric 2) with substrate weight 586 g/m² via foam application (200-300g/l). On the coated fabric, the BS 5852 fire test was conducted: flame 3 cm - 20" vertically on mousse.

From the results of the fire test shown in Table 10, it follows that when 93 g/m² of dry product, this is 16% wof, of the compound of example 3 is applied to the fabric 2, the coated fabric passes the BS5852 test. The after-flame time at a flame time of 20s is less than 120s.

**Table 10: burn test**

| | coating weight | Flaming time | 20s |
|---|---|---|---|
| compound example 3 | 93 g/m² | after-flaming time | 0s/0s/0s |
| fabric 2 | 16% wof | conclusion | OK |

| | | | |
|---|---|---|---|
| Wof=weight of fabric | | | |

### Example 7

The compound of example 4 was coated on a polyester/cotton fabric (fabric 3): substrate weight 624 g/m², via foam application (200-400g/l). On the coated fabric, the BS 5852 fire test was conducted (flame 3cm - 20" vertically on mousse).

From the results of the fire test shown in Table 11, it follows that when 166 g/m² of dry product (this is 27% wof) of the compound of example 4 is applied to the fabric 3, the coated fabric passes the BS5852 test. The after-flame time at a flame time of 20s is less than 120s.

**Table 11: burn test**

| | coating weight | Flaming time | 20s |
|---|---|---|---|
| compound example 4 | 166 g/m² | after-flaming time | 0s/12s/0s |
| fabric 3 | 27% wof | conclusion | OK |

| | | | |
|---|---|---|---|
| Wof=weight of fabric | | | |

A comparison was carried out with a halogen-containing compound.

**Table 12: burn test**

| | coating weight | Flaming time | 20s |
|---|---|---|---|
| halogen-containing compound | 116 g/m² | after-flaming time | 0s/0s/0s |
| fabric 1 | 31% wof | conclusion | PASS |

From the results of the fire test shown in the above-mentioned Table 12, it follows that when 116g/m² of dry product (this is 31% wof) of a conventional halogen-containing compound is applied to the fabric 1, the coated fabric passes the BS5852 test. The after-flame time at a flame time of 20s is less than 120s.

## Claims

1. Flame-retardant composition for coating a textile substrate, comprising:
1-80 weight% endothermic blowing agent comprising in combination an organic acid and an inorganic carbonate base suitable for forming water and CO₂ when heated,
1-20 weight% surfactant,
optionally a binder and or an auxiliary agent,
remainder water,

2. and wherein the weight% are expressed with respect to the total weight of the composition, **characterized in that**, the dry matter content is 40-70%.

3. Composition according to claim 1, wherein the blowing agent is in powder form. preferably as free flowing powder.Composition according to claim 1 or 2, wherein the blowing agent has a decomposition temperature of at least 140 °C.

4. Composition according to one of the preceding claims, wherein the acid is selected from the group of malonic acid, citric acid, citric acid derivatives such as esters and the base is bicarbonate; preferably a combination of sodium bicarbonate and citric acid derivatives in polymeric carrier granules.

5. Composition according to one of the preceding claims, wherein the auxiliary agent is selected from the list of a binder, a dispersing agent, a plasticizer, a textile softener, a thickener, a biocide, an anti-foaming agent, a filler or combinations thereof.

6. Composition according to one of the preceding claims, **characterized in that** the dry matter content is 45%-55%, more preferably 49%-51%.

7. Textile product with flame retardant properties comprising a textile substrate, wherein the textile substrate comprises:
- a composition of yarns, fibers and/or straps, natural and/or synthetic, processed into a whole,
- a binder to keep the composition together or to fix it to a carrier material, wherein the binder is provided with a fire-retardant composition according to claims 1-6.

8. Textile product according to claim 7, wherein the textile substrate is covered with the flame-retardant composition.

9. Method for producing a flame-retardant composition for covering a textile substrate, comprising the steps of:
adding to water 1-80% by weight endothermic blowing agent comprising in combination an organic acid and an inorganic carbonate base suitable for forming water and CO₂ when heated, and 1-20% by weight surfactant,
optionally adding to the thus obtained dispersion a binder,
optionally adding one or more auxiliaries.

10. Method for making a textile substrate flame-retardant, comprising the steps of:
- providing a textile substrate,
- applying a composition according to one of claims 1-6 to one or more surfaces of the textile substrate; preferably on the back-side of the textile substrate, and
- drying of the textile substrate provided with flame-retardant composition at a temperature lower than the decomposition temperature of the blowing agent.

11. Method according to claim 10, wherein a flame-retardant composition is applied to the fabric via foam application at a foam liter weight of 200 to 400 g/l.

12. Method according to claim 11, wherein the composition is applied via coating, preferably by means of a paste coating or foam coating.

13. Use of a composition according to one of claims 1-5 for making a textile substrate flame retardant, preferably compliant with BS 5852.

14. Use according to claim 13, wherein the textile substrate is a floor covering, a carpet, a mat, a curtain fabric, an upholstery fabric, a mattress, a mattress ticking, a toy, a wallpaper fabric, a technical textile, or combinations thereof.
